# EUROPÄISCHE PATENTSCHRIFT

(11) **EP 2 589 552 B1**
(45) Veröffentlichungstag und Bekanntmachung des Hinweises auf die Patenterteilung: **11.06.2014**
(21) Anmeldenummer: 12189667.4
(22) Anmeldetag: 24.10.2012
(51) Int. Cl.: B65G 15/60, B65G 23/06

(54) **Fördereinrichtung mit einem angetriebenen Endloszugmittel für Produkte der Tabak verarbeitenden Industrie**
Conveyor device with powered endless pulling means for products from the tobacco processing industry
Dispositif convoyeur doté d'un moyen de traction sans fin entraîné pour produits de l'industrie de traitement du tabac

(30) Priorität: 02.11.2011 DE 102011117416
(43) Veröffentlichungstag der Anmeldung: 08.05.2013
(73) Patentinhaber: HAUNI Maschinenbau AG, 21033 Hamburg (DE)
(72) Erfinder: Burfeind, Kai, 21684 Agathenburg (DE)
(74) Vertreter: Müller Verweyen

(56) Entgegenhaltungen:
- DE-A1- 2 719 332
- DE-A1- 2 839 262
- US-A- 3 521 740

## Beschreibung

Die Erfindung betrifft eine Fördereinrichtung mit einem angetriebenen Endloszugmittel für Produkte der Tabak verarbeitenden Industrie mit wenigstens einer Umlenkeinrichtung, an der das Endloszugmittel außenseitig umgelenkt ist, wobei das Endloszugmittel nach außen vorstehende Mitnehmer zur Mitnahme der Produkte aufweist.

Fördereinrichtungen mit angetriebenen Endloszugmitteln werden z.B. dazu verwendet, Rohprodukte, wie z.B. geschnittene Tabakfasern, einer weiteren Verarbeitungsstation zuzuführen, wobei das Rohprodukt dabei als Massengut über eine horizontale Strecke oder über einen Schrägabschnitt zu einem Abgabeort transportiert wird. Das Rohprodukt wird dabei auf das Endloszugmittel aufgegeben und mittels einer Vielzahl von auf dem Endloszugmittel angeordneten Mitnehmern mitgenommen. Die Mitnehmer können je nach der Beschaffenheit des Rohproduktes entweder als durchgehende, von dem Endloszugmittel abragende Schienen oder auch als vorstehende Zinken ausgebildet sein. Alternativ können die Mitnehmer auch aus einer Kombination einer durchgehenden Schiene mit davon abragenden Zinken ausgebildet sein. Zur Erzielung einer möglichst hohen Förderkapazität ist es sinnvoll, ein möglichst breites Endloszugmittel zu verwenden, wobei sich eine Breite von 1600 - 2200 mm bei einer Förderkapazität von 16 t/h für den Verarbeitungsprozess der Produkte in der Gesamtvorrichtung als erstrebenswert herausgestellt hat. Das Endloszugmittel selbst kann aus einem Gewebeband oder aus einem gewebeverstärkten Elastomergurt hergestellt sein.

Das Endloszugmittel muss während der Förderbewegung an verschiedenen Umlenkstellen mehrfach umgelenkt werden, und kann in einen Obertrum und einen Untertrum unterteilt werden. Der Obertrum ist der Abschnitt des Endloszugmittels, in dem das Produkt von dem Aufgabe- zu dem Abgabeabschnitt des Endloszugmittels transportiert wird, während der Untertrum der Abschnitt des Endloszugmittels ist, in dem das Endloszugmittel von dem Abgabeabschnitt des Endloszugmittels an der Unterseite der Fördereinrichtung zu dem Aufgabeabschnitt zurückgeführt wird. Damit läuft der Obertrum, gemäß seines Namens, an der Oberseite der Fördereinrichtung, während der Untertrumm an der Unterseite verläuft. Zur Förderung des Produktes an einen höheren Abgabeabschnitt verläuft das Endloszugmittel dabei im Obertrum von dem horizontalen Aufgabeabschnitt in einem Schrägabschnitt nach oben zu einem wiederum horizontalen Abgabeabschnitt. Der Aufgabe- und/oder Abgabeabschnitt können selbstverständlich auch in einem Winkel verlaufen, oder je nach der Geometrie der Fördereinrichtung nur sehr kurz ausgebildet sein. Im Rücklauf des Endloszugmittels in dem Untertrum ist die Reihenfolge dann entsprechend umgekehrt, wobei auf dem Untertrum des Endloszugmittels dann kein Produkt mehr aufliegt.

Im Übergang von dem horizontalen Aufgabeabschnitt zu dem Schrägabschnitt und von dem Schrägabschnitt zu dem horizontalen Abgabeabschnitt muss das Endloszugmittel jeweils durch Anlage an einer innen- oder außenseitig angeordneten Umlenkeinrichtung umgelenkt werden. Bei der Umlenkung des Endloszugmittels an der außenseitig angeordneten Umlenkeinrichtung ist dabei zu berücksichtigen, dass auf dem Endloszugmittel die abragenden Mitnehmer vorgesehen sind. Aus diesem Grund wurde die außenseitige Umlenkeinrichtung bisher dadurch verwirklicht, indem das Endloszugmittel an mehreren an dem Rand des Endloszugmittels angeordneten Umlenkrollen umgelenkt und geführt ist, so dass der Mittenabschnitt des Endloszugmittels mit den Mitnehmern frei zwischen den Umlenkrollen hindurch laufen kann, und dadurch zwangsläufig nicht unterstützt wird.

Für den Fall, dass mit der Fördereinrichtung eine große Förderhöhe erzielt werden soll, muss der Schrägabschnitt verhältnismäßig lang und/oder steil ausgeführt werden, wobei die Abstände zwischen den Umlenkeinrichtungen des Endloszugmittels dann entsprechend groß gewählt werden müssen. Dieser große Abstand in Verbindung mit der großen Breite des Endloszugmittels hat nachteilig zur Folge, dass das Endloszugmittel unter dem Eigengewicht und/oder unter den hohen, in dem Endloszugmittel wirkenden Zugkräften im Bereich der Umlenkeinrichtung zwangsläufig ausbeult. Aufgrund dieser sich ergebenden Ausbeulung werden die Führung des Endloszugmittels und die Spannungsverteilung in dem Endloszugmittel nachteilig beeinflusst, wodurch wiederum die maximal zu verwirklichende Zugkraft und die Breite des Endloszugmittels begrenzt werden. Da die Breite des Endloszugmittels und die Zugkraft in dem Endloszugmittel unmittelbar mit der Förderkapazität der Fördereinrichtung zusammenhängen, wird dadurch auch indirekt die maximale Förderkapazität begrenzt.

Aufgabe der Erfindung ist es, eine Fördereinrichtung der gattungsgemäßen Art mit einer höheren, maximal zu realisierenden Förderkapazität zu schaffen.

Zur Lösung der Aufgabe wird eine Fördereinrichtung mit den Merkmalen von Anspruch 1 vorgeschlagen. Weitere bevorzugte Weiterbildungen der Erfindung sind den Unteransprüchen, den Figuren und der zugehörigen Beschreibung zu entnehmen.

Gemäß dem Grundgedanken der Erfindung wird vorgeschlagen, dass die Umlenkeinrichtung durch wenigstens ein drehbar gelagertes Führungsteil gebildet ist, welches mit einer radial äußeren Führungsfläche an dem Endloszugmittel anliegt, wobei die Führungsfläche durch regelmäßig angeordnete Ausnehmungen unterbrochen ist, in die die Mitnehmer aufnehmbar sind, wobei eine Verstelleinrichtung vorgesehen ist, mittels derer die Ausrichtung des Führungsteils zu dem Endloszugmittel während des Betriebes der Fördereinrichtung justierbar ist.

Der Vorteil der vorgeschlagenen Lösung besteht darin, dass das Endloszugmittel aufgrund der vorgeschlagenen Formgebung des Führungsteils auch im Bereich zwischen den Mitnehmern geführt und unterstützt wird, so dass der Durchhang des Endloszugmittels erheblich reduziert werden kann. Ferner kann die Ausrichtung des Führungsteils während des Betriebes der Fördereinrichtung durch die vorgeschlagene Verstelleinrichtung justiert werden, so dass das Führungsteil immer in einem für die Führung und Unterstützung des Endloszugmittels optimalen Bereich anliegt. Insbesondere kann dadurch verhindert werden, dass das Führungsteil mit den Mitnehmern kollidiert bzw. es kann im Umkehrschluss sichergestellt werden, dass die Mitnehmer während des Umlaufens des Endloszugmittels immer sauber in die Ausnehmungen des Führungsteils einsteuern. Die Justierung des Führungsteils erfolgt dabei bevorzugt selbsttätig und in regelmäßigen Abständen, so dass eine manuelle Bedienung der Verstelleinrichtung von außen nicht erforderlich ist.

Weiter wird vorgeschlagen, dass das Führungsteil über eine Führungsfläche an dem Endloszugmittel unter Wirkung von Gleitreibung anliegt, und die Führungsfläche durch wenigstens eine drehbar gelagerte Rolle unterbrochen ist, mit der das Führungsteil wenigstens kurzzeitig unter Wirkung von Rollreibung an dem Endloszugmittel zur Anlage gelangt. Da die Gleitreibung grundsätzlich erheblich höher als die Rollreibung ist, wird aufgrund der geringeren Reibkräfte während der Rollreibung eine Relativbewegung zwischen dem Führungsteil und dem Endloszugmittel besonders einfach ermöglicht, welche zur Ausrichtung des Führungsteils gegenüber dem Endloszugmittel erforderlich ist. Das Führungsteil kann dadurch insbesondere geringfügig um die Drehachse verdreht werden, so dass insbesondere die Winkelausrichtung des Führungsteils in der Querschnittsebene senkrecht zu den Mitnehmern verstellt werden kann.

Ferner wird vorgeschlagen, dass das Führungsteil drehfest auf einer drehbaren Welle angeordnet ist, und dass die Verstelleinrichtung durch ein auf der Welle drehfest angeordnetes Stellantriebsrad gebildet ist, welches wenigstens kurzzeitig in einer Stellung, in der das Führungsteil unter Wirkung von Rollreibung an dem Endloszugmittel anliegt, von einem an dem Endloszugmittel angeordneten Mitnehmer antreibbar ist.

Durch die vorgeschlagene Lösung kann eine Justierung des Führungsteils auf einfachste Art dadurch bewirkt werden, indem das Führungsteil durch die Wirkung der Rollreibung kurzzeitig von der Bewegung des Endloszugmittels entkoppelt wird und durch die Bewegung des Endloszugmittels selbst, in diesem Fall durch den daran angeordneten Mitnehmer, und das Stellantriebsrad neu ausgerichtet wird. Da das Stellantriebsrad über die Welle drehfest mit dem Führungsteil verbunden ist, also mit dem Führungsteil mitdreht, wird das Führungsteil regelmäßig wenigstens einmal je Umdrehung gegenüber dem Endloszugmittel nachjustiert. Bedarfsweise kann eine Justierung des Führungsteil auch mehrmals je Umdrehung erfolgen, für diesen Fall müssen nur mehrere Rollen über den Umfang verteilt an dem Führungsteil angeordnet werden und das Stellantriebsrad muss entsprechend mehrmals je Umdrehung von einem Mitnehmer des Endloszugmittels angetrieben werden.

In diesem Fall wird weiter vorgeschlagen, dass an dem Stellantriebsrad ein Bolzen vorgesehen ist, welcher zum Antrieb des Stellantriebsrades an dem Mitnehmer zur Anlage gelangt, und welcher an dem Stellantriebsrad in einer definierten Anordnung zu dem Führungsteil angeordnet ist. Da das Stellantriebsrad über die Welle in einer festen Ausrichtung zu dem Führungsteil angeordnet ist, und der Bolzen durch die Anlage des Mitnehmers eine Ausrichtung des Endloszugmittels und der daran angeordneten Mitnehmer zu dem Stellantriebsrad definiert, wird durch die definierte Anordnung des Bolzens zu dem Führungsteil auch eine Lagebeziehung zwischen Mitnehmer des Endloszugmittels und dem Führungsteil hergestellt, welche schließlich den synchronisierten Lauf des Führungsteils zu dem Endloszugmittel und den Mitnehmern nach der Verstellung verbessert. Für den Fall, dass die Ausrichtung nicht der vorgegebenen Ausrichtung entspricht, wird das Führungsteil aufgrund der niedrigen wirkenden Rollreibung automatisch von dem Stellantriebsrad in die vorgegebene Ausrichtung verdreht.

Vorzugsweise ist der Bolzen derart an dem Stellantriebsrad positioniert, dass das Führungsteil durch den Antrieb des Stellantriebsrades von dem Mitnehmer in eine Stellung justierbar ist, in der die Mitnehmer in etwa mittig in die Ausnehmungen hineinragen. Durch die vorgeschlagene Ausrichtung des Führungsteils kann die Wahrscheinlichkeit einer Kollision der Mitnehmer mit dem Führungsteil einerseits gering gehalten werden, und es wird außerdem eine bestmögliche Unterstützung des Endloszugmittels durch das Führungsteil ermöglicht. Insbesondere kann das Stellantriebsrad wenigstens an einem radial äußeren Abschnitt wenigstens eine drehbar gelagerte Rolle aufweisen, welche derart angeordnet ist, dass sie ungefähr zeitgleich mit der drehbar gelagerten Rolle des Führungsteils zur Anlage an dem Endloszugmittel gelangt. Durch die vorgeschlagene Ausbildung des Stellantriebsrades kann dieses auch in einer Überdeckung und Anlage an dem Endloszugmittel, nahe der Mitnehmer, angeordnet werden, ohne dass dadurch die Justierbewegung des Führungsteiles gestört wird. Dabei ist es insbesondere wichtig, dass die Rolle derart angeordnet ist, dass sie ungefähr zeitgleich mit der Rolle des Führungsteils zur Anlage an dem Endloszugmittel gelangt, damit sich die Baugruppe, gebildet aus dem Führungsteil, der Stellantriebsrad und der Welle, insgesamt gegenüber dem Endloszugmittel verdrehen kann. Dabei reicht es aus, wenn die Rollen an dem Führungsteil und dem Stellantriebsrad in einem Winkel versetzt zueinander angeordnet sind und die Rollreibungsabschnitte sich quasi überdecken und in einem Winkelabschnitt vor und/oder nach der Überdeckung jeweils nur das Stellantriebsrad und/oder das Führungsteil mit Rollreibung anliegen, während das jeweils andere Teil mit Gleitreibung anliegt.

Weiter wird vorgeschlagen, dass die drehbar gelagerte Rolle an einem Abschnitt des Stellantriebsrades angeordnet ist, mit dem das Stellantriebsrad unmittelbar vor oder nach dem Beginn des Antriebes durch den Mitnehmer an dem Endloszugmittel zur Anlage gelangt. Da das Endloszugmittel das Stellantriebsrad nur in einem begrenzten Winkel umfasst, läuft das Endloszugmittel zuerst in einer Auflaufbewegung tangential auf das Stellantriebsrad auf und anschließend ebenfalls tangential in einer Ablaufbewegung wieder ab. Da die Verstellbewegung des Führungsteils durch eine Relativbewegung zwischen den Bolzen und dem Mitnehmer während der Auflauf- oder Ablaufbewegung bewirkt wird, wird die Relativbewegung gezielt dadurch ermöglicht, indem die Rollen so angeordnet sind, dass die unmittelbar vor dem Beginn der Antriebsbewegung, also vor der Auflauf- oder Ablaufbewegung des Mitnehmers an dem Bolzen, zur Anlage an dem Endloszugmittel gelangen und dadurch die zwischen dem Endloszugmittel und dem Stellantriebsrad wirkende Gleitreibung aufheben.

Die Erfindung wird im Folgenden anhand bevorzugter Ausführungsformen unter Bezugnahme auf die beigefügten Figuren erläutert. Dabei zeigt:
- Fig. 1:: eine Fördereinrichtung mit einem Endloszugmittel;
- Fig. 2:: einen vergrößerten Ausschnitt der Fördereinrichtung im Bereich der Umlenkeinrichtung;
- Fig. 3:: die Umlenkeinrichtung mit einem Stellantriebsrad und einem dahinter angeordneten Führungsteil von der Seite;
- Fig. 4:: das Stellantriebsrad in der Stellung des Beginns des Auflaufens eines Mitnehmers;
- Fig. 5:: das Stellantriebsrad in der Stellung des Endes des Ablaufens eines Mitnehmers;
- Fig. 6:: eine Bewegungskurve des Mitnehmers zu dem Stellantriebsrad.

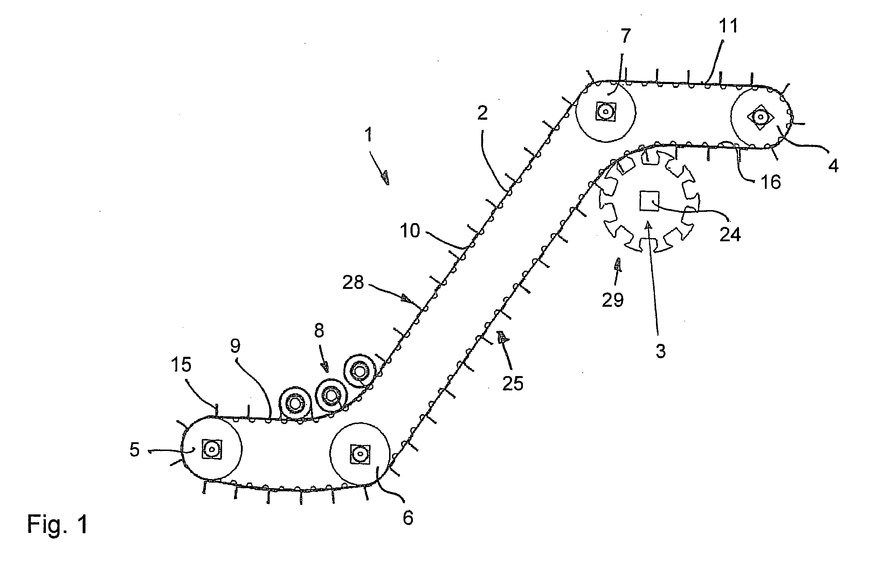

In der Figur 1 ist eine erfindungsgemäß ausgebildete Fördereinrichtung 1 mit einem Endloszugmittel 2 zu erkennen. Das Endloszugmittel 2 kann durch einen Gewebegurt, einen gewebeverstärkten Elastomergurt oder auch aus einem anderen Material gebildet sein, welches ausreichend flexibel ist und gleichzeitig die nötige Zugfestigkeit zur Übertragung der Zugkraft aufweist. Die Fördereinrichtung 1 weist einen horizontalen Aufgabeabschnitt 9, einen höher gelegenen horizontalen Abgabeabschnitt 11 und einen den Aufgabe- und Abgabeabschnitt 9 und 11 miteinander verbindenden Schrägabschnitt 10 auf. Zum Antrieb des Endloszugmittels 2 ist dieses an seiner Innenseite mit vorstehenden Nocken 16 versehen, mit denen das Endloszugmittel 2 formschlüssig in Eingriff in entsprechend geformte Ausnehmungen einer Antriebstrommel 4 gelangt, die wiederum von einer Antriebseinrichtung, wie z.B. einem Elektromotor, antreibbar ist. An dem horizontalen Aufgabeabschnitt 9 wird das Endloszugmittel 2 mittels einer Trommel 5 umgelenkt. Zwischen der Antriebstrommel 4 und der Trommel 5 sind verschiedene Umlenkeinrichtungen 6,7,8 und 29 vorgesehen, um das Endloszugmittel 2 dem oben beschriebenen Verlauf entsprechend zu führen. An der Außenseite des Endloszugmittels 2 sind nach außen abragende Mitnehmer 15 vorgesehen, welche das Produkt von dem Aufgabeabschnitt 9 den Schrägabschnitt 10 hinauf zu dem Abgabeabschnitt 11 transportieren. Produkte, welche mittels der beschriebenen Fördereinrichtung 1 förderbar sind, sind z.B. Tabakfasern in verschiedenen Verbundformen, lose Tabakfasern, Rohtabak, Tabakfolie oder expandierter Tabak, welche zur weiteren Verarbeitung kontinuierlich gefördert werden müssen.

Aufgrund der mit modernen Fördereinrichtungen 1 zu erzielenden Förderhöhe von mehreren Metern ist es nicht zu vermeiden, dass der Abstand zwischen den den Schrägabschnitt 10 in Längsrichtung begrenzenden Umlenkeinrichtungen 6,8 und 7,29 bis zu 8,00 m beträgt. Damit das Produkt über diesen verhältnismäßig langen Schrägabschnitt 10 gefördert wird, muss das Endloszugmittel 2 mit einer entsprechend großen Zugkraft angetrieben werden, wodurch die eingangs beschriebene Problematik mitbegründet ist.

Das Endloszugmittel 2 kann in seinem Verlauf in einen Obertrum 28 und einen Untertrum 25 unterteilt werden, wobei das Produkt auf den Obertrum 28 aufgegeben und gefördert wird, während das Endloszugmittel 2 in dem Untertrum 25 von dem Abgabeabschnitt 11 zu dem Aufgabeabschnitt 9 zurückgeführt wird.

Sofern der Antrieb des Endloszugmittels 2 über die Antriebstrommel 4 erfolgt, ist die Gefahr des Ausbeulens des Endloszugmittels 2 an der außenseitig an dem Untertrum 25 anliegenden Umlenkeinrichtung 29 am größten. Sofern der Antrieb des Endloszugmittels 2 von der Seite des Aufgabeabschnitts 9 erfolgt, ergibt sich zwar eine etwas andere Kräfteverteilung, die kritische Stelle des Ausbeulens des Endloszugmittels 2 bleibt aber die Umlenkeinrichtung 29.

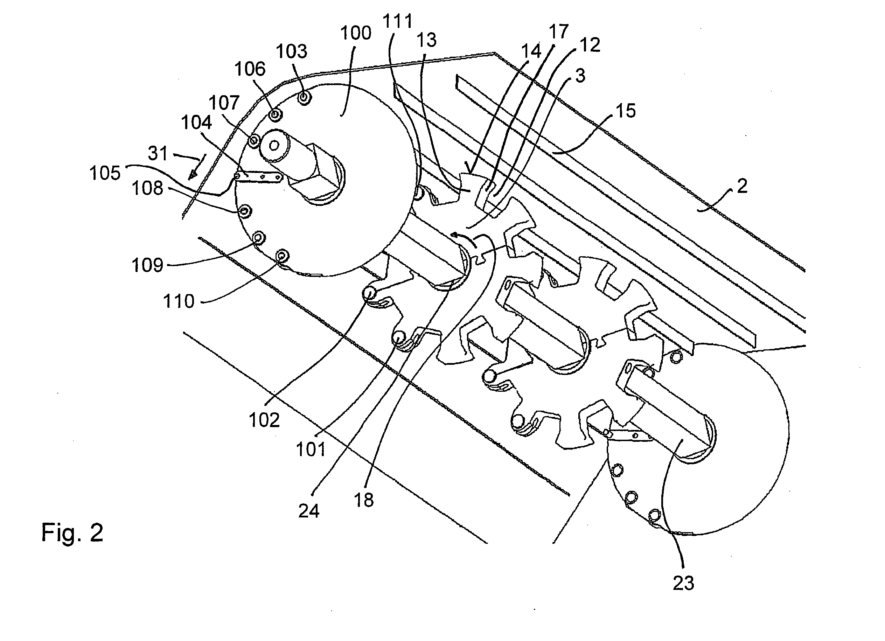

Damit das Endloszugmittel 2 an der Umlenkeinrichtung 29 aufgrund der hohen Zugkräfte und der großen Breite nicht ausbeult, ist die Umlenkeinrichtung 29 erfindungsgemäß durch das Führungsteil 3 gebildet, welches nachfolgend in den Figuren 2 bis 8 näher beschrieben wird.

In der Figur 2 ist das Führungsteil 3 in Seitenansicht auf das Endloszugmittel 2 zu erkennen. Das Führungsteil 3 weist eine Mehrzahl von durch Ausnehmungen 12 voneinander getrennte, nach außen abragende Finger 13 auf, deren Stirnseiten in der Gesamtheit eine Führungsfläche 14 bilden, die durch die Ausnehmungen 12 unterbrochen wird. Dabei ist es für die Funktionsfähigkeit der Erfindung unerheblich, ob der Flächenanteil der Ausnehmungen 12 oder der Flächenanteil der Stirnseiten der Finger 13 den größeren Anteil des Umfanges ausmachen, wichtig ist nur, dass die Stirnseiten der Finger 13 so ausgebildet sind, dass sie durch die Anlage an dem Endloszugmittel 2 die Ausbeulung des Endloszugmittels 2 im Bereich der Umlenkeinrichtung 29 zumindest verringern und dadurch zusammen während des Bewegungsablaufs eine Führungsfläche 14 bilden. Aufgrund der vorgesehenen Ausnehmungen 12 wird es ermöglicht, dass die Mitnehmer 15 in das Führungsteil 3 eintauchen, und die Finger 13 dadurch mit den Stirnseiten zur Anlage an der Außenseite des Endloszugmittels 2 gelangen, ohne dass die Mitnehmer 15 den Bewegungsablauf stören. Das Endloszugmittel 2 wird damit an der Führungsfläche 14, gebildet durch die Stirnseiten der Finger 13, umgelenkt.

Die Abstände der Ausnehmungen 12 sind dabei so gewählt, dass wenigstens einer oder mehrere Mitnehmer 15 zu einem Zeitpunkt in eine oder unterschiedliche Ausnehmungen 12 eintauchen. Ferner verengen sich die Ausnehmungen 12 nach außen hin, so dass sich insgesamt eine größere Führungsfläche 14 ergibt, und die Mitnehmer 15 während der Bewegung des Endloszugmittels 2 in Pfeilrichtung 31 eine Schwenkbewegung in den Ausnehmungen 12 ausführen können.

Während der Bewegung des Endloszugmittels 2 in Pfeilrichtung 31 gelangen die Mitnehmer 15 beim Ausfahren aus den Ausnehmungen 12 an dem Rand 17 der Ausnehmungen 12 zu Anlage und treiben dadurch das Führungsteil 3 in Pfeilrichtung 18 zu einer synchronen Drehbewegung an. Durch die synchrone Drehbewegung werden jeweils eine Ausnehmung 12 und ein Mitnehmer 15 in dem Anlaufbereich des Endloszugmittels 2 auf das Führungsteil 3 synchron paarweise aufeinander zu bewegt, so dass sich insgesamt ein harmonischer klemmfreier Bewegungsablauf des Führungsteils 3 zu dem Endloszugmittel 2 ergibt. Außerdem können die Reibung und der Verschleiß des Endloszugmittels 2 und des Führungsteils 3 durch die synchrone Drehbewegung des Führungsteils erheblich reduziert werden.

In den Darstellungen ist stellvertretend immer nur ein Führungsteil 3 zu erkennen. Sinnvollerweise sind zur Unterstützung des relativ breiten Endloszugmittels 2 eine Mehrzahl von identischen Führungsteilen 3 vorgesehen, welche mittels einer in entsprechende Ausnehmungen 24 der Führungsteile 3 eingreifenden Welle 23 drehfest und in identischer Ausrichtung miteinander verbunden sind. Die Anzahl und die Abstände der Führungsteile 3 können dabei in Abhängigkeit der individuellen Zugkraft und Flächenlast des Endloszugmittels 2 gewählt werden. Aufgrund der identischen Ausrichtung der Führungsteile 3 und der synchronisierten Antriebsbewegung befinden sich die Ausnehmungen 12 der verschiedenen Führungsteile 3 in einer festen räumlichen Zuordnung zueinander und zu den auflaufenden Mitnehmern 15, so dass sich bei einer entsprechend regelmäßigen Anordnung der Mitnehmer 15 ein harmonischer klemmfreier Bewegungsablauf erzielen lässt. Im Idealfall sind die Ausnehmungen 12 dabei quer zu der Bewegungsrichtung des Endloszugmittels 2 fluchtend ausgerichtet, so dass die Mitnehmer 15 als quer zu der Bewegungsrichtung des Endloszugmittels 2 ausgerichtete Schienen ausgebildet sein können, was wiederum Vorteile für den Transport des Produktes bietet. Die Führungsteile 3 können als Scheiben auf der Welle 23 befestigt werden, und verursachen dadurch bei einer ausreichenden mechanischen Unterstützung aufgrund der geringen Breite nur geringe Reibungskräfte, welche zudem dadurch auf ein Minimum reduziert werden, indem die Führungsteile 3 von dem Endloszugmittel 2 synchronisiert angetrieben werden und dadurch in der Anlagefläche mit derselben Geschwindigkeit bewegt werden. Ferner ist die Verwendung von Scheiben als Führungsteile 3 insofern vorteilhaft, da diese wenig Bauraum benötigen und kostengünstig gefertigt werden können.

Ferner ist an einigen der Finger 13 der Führungsteile 3 statt der Führungsfläche 14 jeweils eine radial nach außen vorstehende, drehbar gelagerte Rolle 101,102 und 111 vorgesehen, welche die Führungsfläche 14 unterbrechen und in gleicher Weise zur Anlage an der Unterseite des Endloszugmittels 2 gelangen wie die Führungsfläche 14. Auf den Enden der Welle 23 sind zwei Stellantriebsräder 100 vorgesehen, welche drehfest mit dieser verbunden sind und ebenfalls an der Unterseite des Endloszugmittels 2 anliegen. An dem Stellantriebsrad 100 ist jeweils ein Halter 104 mit einem in Richtung der Führungsteile 3 ragenden Bolzen 105 vorgesehen, welcher in der Länge derart bemessen ist, dass er bei einer Bewegung des Endloszugmittels 2 zu dem Stellantriebsrad 100 in Umfangsrichtung zur Anlage an einem der Mitnehmer 15 gelangt. Aufgrund der drehfesten Verbindung der Führungsteile 3 und der Stellantriebsräder 100 mit der Welle 23 bilden diese Teile eine zueinander drehfeste Baugruppe, welche während des Betriebes der Fördereinrichtung 1 in Pfeilrichtung 18 rotiert. Jeweils in den in Drehrichtung 18 vor und hinter dem Bolzen 105 befindlichen Abschnitten des Umfanges des Stellantriebsrades 100 sind drehbar gelagerte Rollen 103,106,107,108,109 und 110 vorgesehen, welche radial nach außen vorstehen und während der Drehbewegung ebenfalls zur Anlage an der Unterseite des Endloszugmittels 2 gelangen.

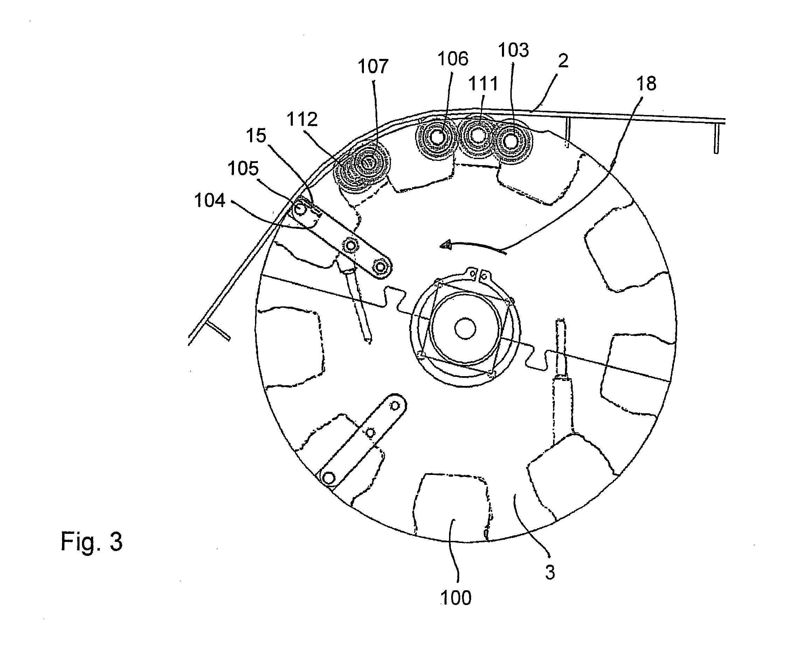

In der Figur 3 ist ein Stellantriebsrad 100 mit einem fluchtend dahinter angedeuteten Führungsteil 3 und einem anliegenden Abschnitt des Endloszugmittels 2 zu erkennen. Das Führungsteil 3 liegt in der gezeigten Stellung mit den Rollen 111 und 112 an der Unterseite des Endloszugmittels 2 an, so dass zwischen dem Führungsteil 3 und dem Endloszugmittel ausschließlich Rollreibungskräfte wirken. Der Bolzen 105 des Stellenantriebsrades 100 liegt an einem kurz vor dem Ablaufen befindlichen Mitnehmer 15 an. Ferner liegt das Stellantriebsrad 100 bereits mit zwei der in Drehrichtung 18 hinter dem Bolzen 105 befindlichen Rollen 106 und 107 an der Unterseite des Endloszugmittels 2 an, während eine dritte Rolle 103 noch nicht anliegt. Sobald die Gleitreibung zwischen dem Stellantriebsrad 100 und dem Endloszugmittel 2 durch eine geringfügige weitere Drehung des Stellantriebsrades 100 vollständig aufgehoben ist und nur noch Rollreibung wirkt, kann der Mitnehmer 15 das Stellantriebsrad 100 mit dem Führungsteil 3 gegenüber dem Endloszugmittel 2 in Pfeilrichtung 18 geringfügig verdrehen, wodurch das Führungsteil 3 gegenüber dem Endloszugmittel 2 und den Mitnehmern 15 wieder neu ausgerichtet wird.

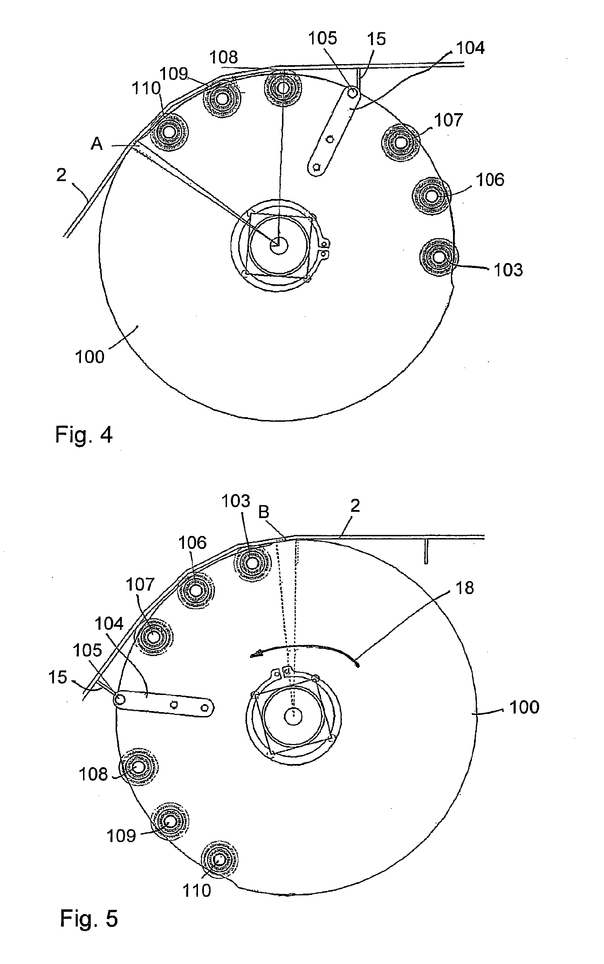

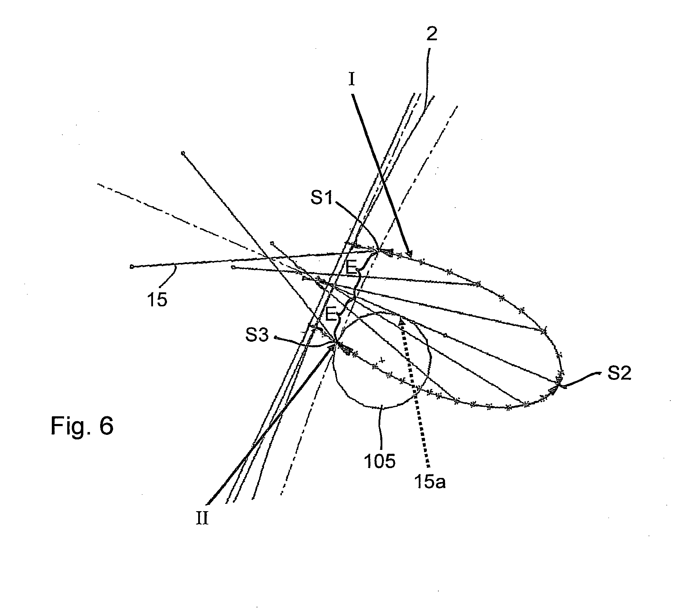

In den Figuren 4 und 5 ist eine Weiterentwicklung der Erfindung zu erkennen, bei der ein Stellantriebsrad 100 mit einem an einem Halter 104 angeordneten Bolzen 105 vorgesehen ist, welche in Drehrichtung 18 in den vor und hinter dem Bolzen 105 befindlichen Abschnitten des äußeren Umfanges jeweils drei Rollen 103,106,107,108,109 und 110 aufweist, die eine Verstellung des Führungsteiles 3 sowohl in der in der Figur 4 gezeigten beginnenden Auflaufphase des Mitnehmers 15, als auch eine Verstellung des Führungsteiles 3 während der in der Figur 5 gezeigten endenden Ablaufphase des Mitnehmers 15 von dem Bolzen 105 ermöglichen. Die Auflaufphase ist dabei die in der Figur 6 gezeigte Bewegungsphase I, zwischen der Stellung S1, in der der Mitnehmer 15 gerade in Kontakt mit dem Bolzen 105 gelangt, bis zu der Stellung S2, in der der Mitnehmer 15 in Form des Streifens genau auf die Drehachse des Stellantriebsrades 100 gerichtet ist, also bis er senkrecht zu der Tangente des Stellantriebsrades 100 ausgerichtet ist. Die Ablaufphase des Mitnehmers 15 ist die Bewegungsphase II, welche mit der senkrechten Stellung des Mitnehmers 15 zu der Tangente des Stellantriebsrades 100 beginnt (also mit der Stellung S2 des Endes der Auflaufphase) und mit der Stellung S3 endet, in der der Mitnehmer 15 den Kontakt zu dem Bolzen 105 verliert. Zu Beginn der Auflaufphase liegt das Stellantriebsrad 100 noch für einen Winkel A unter Wirkung von Gleitreibung an, bis der Mitnehmer 15 vollständig an dem Bolzen 105 anliegt und die Baugruppe aus dem Stellantriebsrad 100 und den Führungsteilen 3 antreibt. Dies ist insbesondere dann wichtig, wenn zum Zeitpunkt dieses Winkels A die Führungsteile 3 nicht mehr mit Gleitreibung, d.h. mit der Führungsfläche 14 anliegt, damit die Baugruppe in jeder Winkelstellung entweder über Gleitreibung oder über die an dem Bolzen 105 anliegenden Mitnehmer 15 angetrieben werden. Gleiches gilt für den Winkel B in der Figur 5, in dem das Stellantriebsrad 100 ebenfalls unter Wirkung von Gleitreibung an dem Endloszugmittel 2 zur Anlage gelangt, bevor die Führungsfläche 14 der Führungsteile 3 zur Anlage an dem Endloszugmittel gelangt. Der Mitnehmer 15 treibt das Stellantriebsrad 100 in diesem Winkel B an und schiebt das Stellantriebsrad 100 praktisch unter das Endloszugmittel 2, so dass das Stellantriebsrad 100 nach dem Ablaufen des Mitnehmers 15 von dem Bolzen 105 in jedem Fall weiter von dem Stellantriebsrad 100 angetrieben wird.

Eine Justierung des Führungsteiles 3 findet immer dann statt, wenn der Mitnehmer 15 entweder in der Auflaufphase oder in der Ablaufphase zu dem Bolzen 105 bewegt wird, und sowohl das Stellantriebsrad 100 als auch das Führungsteil 3 ausschließlich unter Wirkung von Rollreibung, d.h. mit den Rollen 101,102,103,106,107,108,109,110,111 oder 112 an dem Endloszugmittel 2 anliegen.

In der Figur 6 ist die Bewegung des Mitnehmers 15 in Bezug zu dem Stellantriebsrad 100 durch eine Kurve dargestellt, auf der die Kante des Mitnehmers 15 (In der Schnittdarstellung die Spitze des Mitnehmers 15) bewegt wird. Die Bewegungsphase I stellt dabei die Auflaufbewegung und die Bewegungsphase II die Ablaufbewegung dar, während der das Führungsteil 3 jeweils um den Betrag E gegenüber dem Endloszugmittel 2 verstellt werden kann. Der Betrag E entspricht dabei der Abwicklung des Kreisbogenabschnitts des Außendurchmessers des Stellantriebsrades 100, um den das Stellantriebsrad 100 während der Verstellbewegung gegenüber dem Endloszugmittel 2 verdreht wird. Der Bolzen 105 ist beispielhaft in der Stellung dargestellt, in der er an dem in der Stellung S2 befindlichen Mitnehmer 15 in einem Anlagepunkt 15a anliegt.

## Patentansprüche

1. Fördereinrichtung (1) mit einem angetriebenen Endloszugmittel (2) für Produkte der Tabak verarbeitenden Industrie, mit
- wenigstens einer Umlenkeinrichtung (29) im Untertrum, an der das Endloszugmittel (2) außenseitig umgelenkt wird, und
- an dem Endloszugmittel (2) nach außen vorstehenden Mitnehmern (15),
**dadurch gekennzeichnet, dass**
- die Umlenkeinrichtung (29) durch wenigstens ein drehbar gelagertes Führungsteil(3) gebildet ist, welches mit einer radial äußeren Führungsfläche (14) an dem Endloszugmittel (2) anliegt, wobei die Führungsfläche (14) durch regelmäßig angeordnete Ausnehmungen (12) unterbrochen ist, in die die Mitnehmer (15) aufnehmbar sind, wobei
- eine Verstelleinrichtung vorgesehen ist, mittels derer die Winkelausrichtung des Führungsteils (3) zu dem Endloszugmittel (2) während des Betriebes der Fördereinrichtung (1) automatisch justierbar ist.

2. Fördereinrichtung (1) nach Anspruch 1, **dadurch gekennzeichnet, dass**
- das Führungsteil (3) über die Führungsfläche (14) an dem Endloszugmittel (2) unter Wirkung von Gleitreibung anliegt, und
- die Führungsfläche (14) durch wenigstens eine drehbar gelagerte Rolle (101,102,111) unterbrochen ist, mit der das Führungsteil (3) wenigstens kurzzeitig unter Wirkung von Rollreibung an dem Endloszugmittel (2) zur Anlage gelangt.

3. Fördereinrichtung (1) nach Anspruch 1, **dadurch gekennzeichnet, dass**
- das Führungsteil (3) drehfest auf einer drehbaren Welle (23) angeordnet ist, und dass
- die Verstelleinrichtung durch ein auf der Welle (23) drehfest angeordnetes Stellantriebsrad (100) gebildet ist, welches wenigstens kurzzeitig in einer Stellung, in der das Führungsteil (3) unter Wirkung von Rollreibung an dem Endloszugmittel (2) anliegt, von einem an dem Endloszugmittel (2) angeordneten Mitnehmer (15) antreibbar ist.

4. Fördereinrichtung (1) nach Anspruch 3, **dadurch gekennzeichnet, dass**
- an dem Stellantriebsrad (100) ein Bolzen (105) vorgesehen ist, welcher zum Antrieb des Stellantriebsrades (100) an dem Mitnehmer (15) zur Anlage gelangt, und welcher an dem Stellantriebsrad (100) in einer definierten Anordnung zu dem Führungsteil (3) angeordnet ist.

5. Fördereinrichtung (1) nach Anspruch 4, **dadurch gekennzeichnet, dass**
- der Bolzen (105) derart an dem Stellantriebsrad (100) positioniert ist, dass das Führungsteil (3) durch den Antrieb des Stellantriebsrades (100) von dem Mitnehmer (15) in eine Stellung justierbar ist, in der die Mitnehmer (15) in etwa mittig in die Ausnehmungen (12) hineinragen.

6. Fördereinrichtung (1) nach einem der Ansprüche 3 bis 5, **dadurch gekennzeichnet, dass**
- dass das Stellantriebsrad (100) wenigstens an einem radial äußeren Abschnitt wenigstens eine drehbar gelagerte Rolle (103,106,107,108,109,110) aufweist, welche derart angeordnet ist, dass sie zeitgleich mit der drehbar gelagerten Rolle (101,102,111) des Führungsteils (3) zur Anlage an dem Endloszugmittel (2) gelangt.

7. Fördereinrichtung (1) nach Anspruch 6, **dadurch gekennzeichnet, dass**
- die drehbar gelagerte Rolle (103,106,107,108,109,110) an einem Abschnitt des Stellantriebsrades (100) angeordnet ist, mit dem das Stellantriebsrad (100) unmittelbar vor dem Beginn des Antriebes durch den Mitnehmer (15) an dem Endloszugmittel (2) zur Anlage gelangt.

## Claims

1. Conveyor device (1) with a driven endless traction means (2) for products of the tobacco processing industry, comprising
- at least one deflector device (29) on the return side, at the outer side of which the endless traction means (2) is deflected, and
- drive dogs (15) projecting outwards from the endless traction means (2),
**characterized in that**
- the deflector device (29) is formed by at least one pivot-mounted guide member (3) which with a radial outer guiding surface (14) bears against the endless traction means (2), wherein the guiding surface (14) is discontinuous due to regularly spaced recesses (12), into which the drive dogs (15) can be engaged, wherein
- an adjusting device is provided, by which the angular orientation of the guide member (3) relative to the endless traction means (2) can be adjusted automatically while the conveyor device (1) is operated.

2. Conveyor device (1) according to claim 1, **characterized in that**
- the guide member (3) being subjected to sliding friction bears against the endless traction means (2) via the guiding surface (14), and
- the guiding surface (14) is discontinuous due to at least one pivot-mounted roller (101, 102, 111) with which the guide member (3) being subjected to rolling friction at least temporary gets to bear against the endless traction means (2).

3. Conveyor device (1) according to claim 1, **characterized in that**
- the guide member (3) is located in a rotationally-fixed manner on a rotatable shaft (23), and that
- the adjusting device is formed by an adjusting drive wheel (100) located in a rotationally-fixed manner on the shaft (23), which adjusting drive wheel at least temporary can be driven by a drive dog (15) located on the endless traction means (2) in a position in which the guide member (3) being subjected to rolling friction bears against the endless traction means (2).

4. Conveyor device (1) according to claim 3, **characterized in that**
- on the adjusting drive wheel (100) a bolt (105) is provided, which gets to bear against the drive dog (15) for driving the adjusting drive wheel (100), and which is located on the adjusting drive wheel (100) in a defined arrangement relative to the guide member (3).

5. Conveyor device (1) according to claim 4, **characterized in that**
- the bolt (105) is positioned on the adjusting drive wheel (100) in such a way that the guide member (3), as a result of the adjusting drive wheel (100) being driven, by the drive dog (15) can be adjusted to a position in which the drive dogs (15) approximately centrally extend into the recesses (12).

6. Conveyor device (1) according to one of the claims 3 to 5, **characterized in that**
- the adjusting drive wheel (100) at least on one radial outer section comprises at least one pivot-mounted roller (103, 106, 107, 108, 109, 110) which is arranged in such a way that it gets to bear against the endless traction means (2) simultaneously with the pivot-mounted roller (101, 102, 111) of the guide member (3).

7. Conveyor device (1) according to claim 6, **characterized in that**
- the pivot-mounted roller (103, 106, 107, 108, 109, 110) is located on a section of the adjusting drive wheel (100) with which the adjusting drive wheel (100) gets to bear against the endless traction means (2) just before the drive dog (15) starts to drive.

## Revendications

1. Dispositif convoyeur (1) comprenant un moyen de traction sans fin (2) entraîné pour des produits de l'industrie de traitement du tabac, comprenant :
- au moins un système de déviation (29) dans le trajet inférieur, sur lequel le moyen de traction sans fin (2) est dévié côté extérieur, et
- des entraîneurs (15) dépassant vers l'extérieur sur le moyen de traction sans fin (2),
**caractérisé en ce que**
- le système de déviation (29) est formé par au moins un élément de guidage (3) monté rotatif, qui est en appui avec une surface de guidage (14) radialement extérieure contre le moyen de traction sans fin (2), la surface de guidage (14) étant interrompue par des évidements (12) agencés régulièrement, dans lesquels les entraîneurs (15) peuvent être reçues,
- un système de réglage étant prévu, au moyen duquel l'alignement angulaire de l'élément de guidage (3) peut être ajusté automatiquement par rapport au moyen de traction sans fin (2) pendant le fonctionnement du dispositif convoyeur (1).

2. Dispositif convoyeur (1) selon la revendication 1, **caractérisé en ce que**
- l'élément de guidage (3) est en appui par l'intermédiair de la surface de guidage (14) contre le moyen de traction sans fin (2) sous l'action d'un frottement par glissement, et
- la surface de guidage (14) est interrompue par au moins un rouleau (101, 102, 111) monté rotatif qui permet à l'élément de guidage (3) au moins en peu de temps de venir en appui contre le moyen de traction sans fin (2) sous l'action d'un frottement par roulement.

3. Dispositif convoyeur (1) selon la revendication 1, **caractérisé en ce que**
- l'élément de guidage (3) est disposé bloqué en rotation sur un arbre (23) rotatif et **en ce que**
- le système de réglage est formé par une roue d'actionneur (100) qui est disposée bloquée en rotation sur l'arbre (23) et peut être entraînée au moins en peu de temps, par un entraîneur (15) disposé sur le moyen de traction sans fin (2), dans une position dans laquelle l'élément de guidage (3) est en appui contre le moyen de traction sans fin (2) sous l'action du frottement par roulement.

4. Dispositif convoyeur (1) selon la revendication 3, **caractérisé en ce que**
- un boulon (105) est prévu sur la roue d'actionneur (100), lequel vient en appui contre l'entraîneur (15) pour entraîner la roue d'actionneur (100) et est disposé sur la roue d'actionneur (100) dans une disposition définie par rapport à l'élément de guidage (3).

5. Dispositif convoyeur (1) selon la revendication 4, **caractérisé en ce que**
- le boulon (105) est positionné sur la roue d'actionneur (100) de telle sorte que l'élément de guidage (3) peut être ajusté au moyen de l'entraînement de la roue d'actionneur (100) par l'entraîneur (15) dans une position dans laquelle les entraîneurs (15) dépassent sensiblement au milieu dans les évidements (12).

6. Dispositif convoyeur (1) selon une des revendications 3 à 5, **caractérisé en ce que**
- la roue d'actionneur (100) présente au moins sur une portion radialement extérieure au moins un rouleau (103, 106, 107, 108, 109, 110) monté rotatif, lequel est disposé de manière à venir en appui contre le moyen de traction sans fin (2) simultanément avec le rouleau (101, 102, 111) monté rotatif de l'élément de guidage (3).

7. Dispositif convoyeur (1) selon la revendication 6, **caractérisé en ce que**
- le rouleau (103, 106, 107, 108, 109, 110) monté rotatif est disposé sur une portion de la roue d'actionneur (100) permettant à la roue d'actionneur (100) de venir en appui contre le moyen de traction sans fin (2) immédiatement avant le début de l'entraînement par l'entraîneur (15).
